(19) Europäisches Patentamt
European Patent Office
Office européen des brevets

(11) **EP 2 146 448 B1**

(12) **EUROPEAN PATENT SPECIFICATION**

(45) Date of publication and mention
of the grant of the patent:
**17.11.2010 Bulletin 2010/46**

(51) Int Cl.:
*H04B 10/18* (2006.01)  *H04B 10/148* (2006.01)

(21) Application number: **08290696.7**

(22) Date of filing: **16.07.2008**

(54) **Adaptive non-linearity compensation in coherent receiver**

Adaptiver Nichtlinearitätsausgleich in einem kohärenten Empfänger

Compensation de non linéarité adaptative dans un récepteur cohérent

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**20.01.2010 Bulletin 2010/03**

(73) Proprietor: **Alcatel Lucent**
**75008 Paris (FR)**

(72) Inventor: **Bülow, Henning**
**70806 Kornwestheim (DE)**

(74) Representative: **Schmidt, Werner Karl**
**Alcatel Lucent Deutschland AG**
**Intellectual Property & Standards**
**70430 Stuttgart (DE)**

(56) References cited:
**EP-A- 0 901 244          WO-A-2008/036356**
**US-A1- 2004 127 179**

- **KILLEY R I ET AL: "Electronic dispersion compensation by signal predistortion" 1 January 2006 (2006-01-01), (CONFERENCE INFO: OPTICAL FIBER COMMUNICATION CONFERENCE), , XP009110188 * page 3, paragraph 4.CONCLUSIONS ***
- **SAVORY S ET AL: "Digital Equalisation of 40Gbit/s per Wavelength Transmission over 2480km of Standard Fibre without Optical Dispersion Compnesation" 28 September 2006 (2006-09-28), ECOC: PROCEEDINGS OF THE EUROPEAN CONFERENCE ON OPTICAL COMMUNICATION,, PAGE(S) 105 - 106 , XP009110192 * the whole document ***

EP 2 146 448 B1

**Description**

The invention relates to optical communication, in particular to compensation of non-linear distortions incurred in high bit-rate optical communication systems.

State-of-the-art optical transmission schemes using polarization division multiplexing (PDM) of two independently phase modulated signals - e.g. two QPSK (quadrature phase-shift keying) signals - have a higher spectral efficiency compared to non-polarization diverse transmission schemes. In a coherent receiver, such PDM signals may be polarization de-multiplexed and distortion compensated by means of digital signal processing. Next generation transponders for terrestrial networks using bit-rates of 40Gb/s and 100Gb/s are expected to be based on polarization multiplexed QPSK (PDM-QPSK) modulation and coherent detection schemes. Using this technology, DCM-free transmission (i.e. transmission based on fibers without dispersion compensation), very high PMD tolerance and the use of 50GHz spaced ROADMs (reconfigurable optical add-drop multiplexer) will become possible by digital signal processing (DSP) in the optical receiver.

A PDM-QPSK transmitter usually comprises a laser generating an optical carrier signal. The optical carrier signal is split and fed to a first IQ-modulator and a second IQ-modulator. The first IQ-modulator is used for phase modulating a first polarization component (often denoted as "x") of the combined optical output signal, e.g. the TE-component (TE - transversal electric). The second IQ-modulator is used for phase modulating a second orthogonal polarization component (often denoted as "y") of the combined optical output signal, e.g. the TM-component (TM - transversal magnetic).

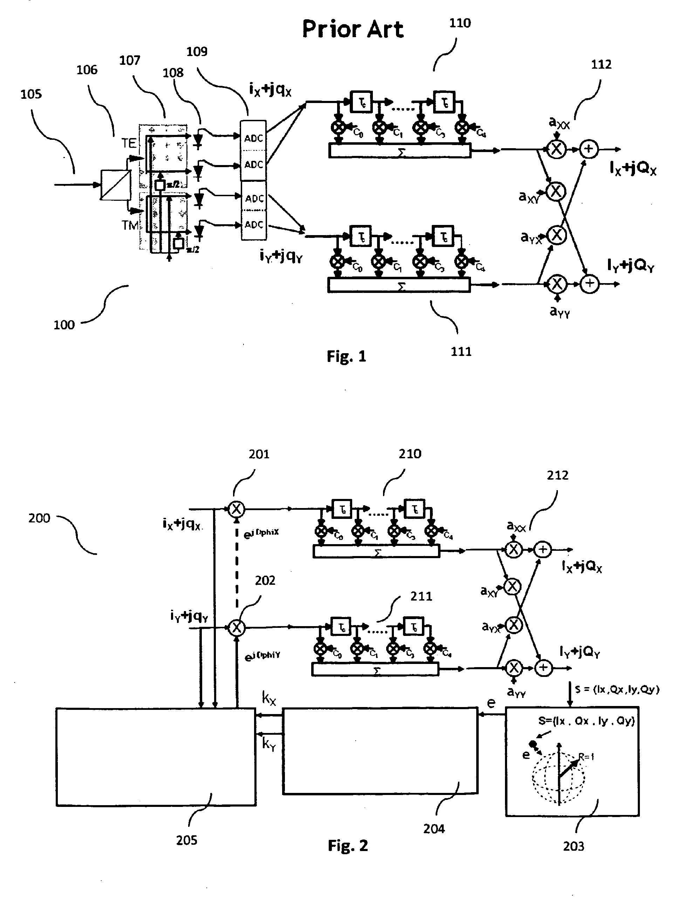

The PDM-QPSK signal is transmitted over an optical fiber and incurs distortions caused by linear and non-linear distortion effects in the optical fiber, such as chromatic dispersion (CD) and polarization mode dispersion (PMD). CD is the phenomenon that the phase velocity of a wave depends on its frequency. In order to compensate these distortions, PDM-QPSK receivers regularly comprise equalizers or compensators which are trained and/or continuously adapted to model the impulse response of the optical transmission channel. Such a prior art PDM-QPSK receiver 100 with CD compensation and polarization de-multiplexing is shown in Fig. 1. A PDM-QPSK signal is received over an optical fiber 105 and passes through a polarization splitter 106 in order to isolate two polarization planes or components of the combined signal, which may be post-processed in the optical or the electrical domain to obtain the original polarization components of the combined PDM signal. Both components pass through demodulators 107 and optical detectors 108, thereby yielding the I and Q sub-components of each polarization component, i.e. the in-phase and the quadrature-phase sub-components of each polarization component. In a next step, these signals may be digitized in a bank of analog-to-digital converters 109 in order to allow for equalization in the digital domain. These input signals to the equalization stages are here referred to as $i_x + jq_x$ and $i_y + jq_y$, respectively.

Compensation of chromatic dispersion may be performed by a set of finite-impulse response (FIR) filter banks 110, 111. In Fig. 1, the FIR filters 110, 111 have an order of five, but any order of equalization filters may be used. In general, a higher filter order should yield a better result for the compensation of chromatic dispersion. It should be noted that as an alternative, compensation of chromatic dispersion may be performed in the optical domain.

The next equalization stage is mainly related to the compensation of distortions related to the polarization of the transmitted combined signal and referred to as polarization de-multiplexing 112. By mixing the "x" signal and the "y" signal, it is possible to compensate certain interactive effects between both polarization components and notably a tilting of the polarization planes may be compensated. As a matter of fact, a polarization de-multiplexer may be required as the optical receiver is not aware of the orientation of the polarization planes of the received PDM signal. As an output of the polarization de-multiplexing stage 112, the compensated signals $I_x + jQ_x$ and $I_y + jQ_y$, respectively, are obtained.

The equalization parameters can be determined by the use of training data and/or by adaptive optimization schemes exploiting known characteristics of the received PDM-QPSK signal, wherein the latter scheme is also referred to as blind equalization. For the determination of the equalization parameters in a blind equalizer, the so-called constant modulus algorithm (CMA) is frequently used to adapt the FIR taps $c_i$, for CD compensation and the polarization de-multiplexing taps $a_{xx}$, $a_{xy}$, $a_{yx}$ and $a_{yy}$. The purpose of equalization is the possibility to achieve higher transmission distances using a given optical input power or to be able to reduce the optical input power for a given transmission distance, thereby reducing the extent of non-linear effects on the optical fiber.

The CMA is discussed in the document "Digital Equalisation of 40Gbit/s per Wavelength Transmission over 2480km of Standard Fibre without Optical Dispersion Compensation", S.J. Savory et al., Proceedings of ECOC 2006, Cannes, France, paper Th2.5.5, Sep. 2006.

For signals of unit amplitude, the CMA tries to minimize the magnitude of the error term $\varepsilon_y = 1 - |y|^2$, wherein $|y|^2$ is the intensity of an output signal $y$ of the equalization stage. In the present case, the signal $y$ may be the output signal of the CD equalizer or the polarization de-multiplexer, e.g. $I_x + jQ_x$ and $I_y + jQ_y$ in Fig. 1.

According to the CMA, the tap coefficients $c_i$ for the CD equalization, with $i = 1,..., N$, are computed in the following way:

$$\underline{c}_i{}' = \underline{c}_i + \mu \varepsilon_y y \cdot \underline{x}^*$$

Here, the term $\underline{c}_i{}'$ denotes the updated vectors of CD tap coefficients $c_i$, $i = 1,\ldots, N$, the term $\underline{c}_i$ denotes the actual vectors of CD tap coefficients, $\mu$ is a convergence parameter, $y$ is the output signal of the equalizer and the term $\underline{x}^*$ denotes the actual vector of the complex conjugate of the input samples x(k+1) to x(k - N) to the equalization stage. In a similar manner, the tap coefficients $a_{xx}$, $a_{xy}$, $a_{yx}$ and $a_{yy}$ for the polarization de-multiplexing may be determined using the CMA.

When further increasing the bit-rates on an optical channel, optical launch power needs to be increased in order to achieve reliable reception. This induces additional non-linear effects which degrade the overall system performance. Notably at bit-rates of 100Gb/s it is expected that intra-channel non-linearity, in particular self-phase modulation (SPM), becomes the limiting effect. SPM is a non-linear optical effect related to the optical Kerr effect. When short pulses of light travel in an optical medium they will induce a varying refractive index of the optical medium. This variation in refractive index will produce a phase shift in the pulse, leading to a change of the pulse's frequency spectrum.

It is an object of the present invention to provide an efficient method and system for compensating SPM in an optical transmission system, particularly in an optical PDM-QPSK transmission system. By using the proposed SPM compensation method, it will be possible to increase the signal-to-noise ratio at the receiver and thereby it will be possible to allow for higher transmission distances at a given optical launch power or for lower optical launch powers at given transmission distances. It is a particular object of the present invention to provide an efficient and fast adaptation scheme for SPM compensation in a coherent receiver using a digital signal processor which allows for automatic adaptation of the filter parameters within the DSP to the actual non-linear distortion.

According to an aspect of the invention, a method and a system for compensating self-phase modulation at an optical receiver of an optical transmission system using polarization division multiplexing and a modulation scheme with constant amplitude is proposed. The method comprises the step of performing a phase modulation on a received signal, wherein the received signal comprises two signal components associated with two orthogonal polarizations, each component comprising an in-phase sub-component and a quadrature-phase sub-component, thereby spanning a four-dimensional space.

By way of example, the received signal may be a PDM-QPSK signal. It should be noted, however, that also other modulation schemes using a constant amplitude of the constellation points for each polarization, e.g. 8-PSK, may be used. Due to the two components of the received signal, which may correspond to the two polarization components of a PDM signal and due to the two I and Q sub-components of each such signal component, a four-dimensional space is spanned. This four-dimensional space is defined by the two sets of I and Q axes. The received signal which is phase modulated may be a signal in the optical domain, but it is preferably the signal in the electrical domain and most preferably in the digital domain (i.e. after analog-to-digial conversion).

The received signal may be phase modulated at different positions within the optical receiver. If the optical receiver comprises additional post-processing means, such as equalizers for CD and/or polarization de-multiplexers, it may be beneficial to perform the phase modulation before equalization of CD and/or before polarization de-multiplexing and/or at other intermediate steps within the post-processing of the optical receiver. It may also be possible to perform the phase modulation within the optical domain, although phase modulation is preferably performed in the digital domain.

The phase modulation may be performed on the combined received signal or it may be performed on one or both signal components of the received signal. By way of example, the phase modulation may be implemented as a joint phase offset of the combined received signal or it may be implemented as a phase offset-of each signal component of the received signal.

The phase modulation is determined by evaluating an error signal which depends on the distance in the four-dimensional space between the received signal after the phase modulation and a four-dimensional sphere defined by target constellation points of the optical transmission system. In other words, the error signal may be defined on the basis of the received signal having passed phase modulation. If the optical receiver comprises additional post-processing means, such as equalizers for CD and/or polarization de-multiplexers, then the error signal may be based on the received signal having passed all or at least a part of these post-processing means including phase modulation. Preferably, the error signal is determined based on the received signal at the output of the post-processing means of the optical receiver.

As outlined above, the received signal may be viewed as a four-dimensional signal defined by its two sets of I and Q sub-components, one set for each polarization or signal component. In an analogous manner, the target constellation points of the underlying modulation scheme of the optical transmission system may be represented in a four-dimensional space. Furthermore, if the underlying modulation scheme employs a constant amplitude, as in case of PSK modulation schemes, then the target constellation points define a four-dimensional sphere. It should be noted that in dependency of the amplitude employed by the modulation, the radius of the four-dimensional sphere may vary. By way of example, the radius of the sphere may be equal to the amplitude of the modulation scheme.

The error signal is preferably determined as the distance of a point in the four-dimensional space defined by a sample (including both components and both sub-components per component) of the received signal and the four-dimensional sphere defined by the target constellation points of the underlying modulation scheme. This distance may be positive, e.g. if the sample point is at the outside of the sphere, or negative, if the sample point is at the inside of the sphere. In a preferable embodiment, the evaluation of the error signal comprises minimization of the error signal, e.g. the minimization of the mean square error.

According to another aspect of the invention, the phase modulation depends on the intensity of the received signal. Preferably, the intensity of the received signal before the phase modulation is used, but also the intensity of the received signal after the phase modulation may be used. This may be beneficial due to the fact that phase distortions caused by SPM are proportional to the intensity of the optical pulse in an optical fiber. As it is an object of post-processing to model linear and non-linear distortion effects of an optical transmission medium as close as possible, it is preferable that the mitigation of SPM at the optical receiver also depends on the intensity of the received signal before the phase modulation.

By way of example, the phase modulation may be performed by offsetting, i.e. by increasing or by decreasing, the signal phase of a signal component by a phase corrector value which is preferably proportional to the intensity of the received signal at the input to the phase modulation. For certain realizations it might be favorable to increase the phase proportional to the difference of the intensity to a certain intensity value. Such an intensity value may be e.g. the mean or average intensity. The factor with which the phase is modulated by the intensity depends on the error signal. The intensity is preferably determined for the signal comprising both signal components. It may be determined by adding the squared amplitudes of the two sets of I and Q sub-components.

According to a further aspect of the invention, the two signal components of the received signal are provided separately. This may be implemented by splitting the received signal at any point within the optical receiver, e.g. by use of a polarization splitter, into its two signal components associated with two orthogonal polarizations, e.g. its TE and TM components. Preferably, such a splitter is positioned in the optical domain at the input of the optical receiver. If both signal components are available separately, it may be beneficial to perform phase modulation on each signal component. The phase modulation may be performed using phase corrector values that have been determined for each signal component separately or the phase modulation may use the same phase corrector value for both signal components. A joint phase corrector value may e.g. be obtained by averaging two phase corrector values determined for the two separate signal components.

According to an aspect of the invention, the method for compensating SPM is an iterative method. This method is preferably implemented in the digital domain where a phase corrector value may be updated and applied iteratively for each signal sample or iteratively on a sub-rate of the symbol rate, i.e. after a certain number of signal samples, e.g. each 64 samples. In such an iterative phase modulation scheme, the phase modulation on a received signal, in particular on a signal component, may depend on a step factor which at a given iteration is obtained by correcting the step factor of the previous iteration by the actual error signal. This actual error signal may be multiplied by a value which depends on the correlation between the signal component before the phase modulation and the corresponding signal component after the phase modulation. By way of example, the correlation may be determined by multiplying the signal component at the input of the phase modulator with the signal component at the output of the phase modulator. For improved convergence performance of the iterative method, it may be beneficial to only consider the imaginary part of this correlation term.

According to a further aspect of the invention, the optical receiver may comprise an equalizer for chromatic dispersion of the received signal and/or a polarization de-multiplexer of the received signal. In such cases, it may be beneficial to position the phase modulator according to the invention upstream of the equalizer for chromatic dispersion and/or upstream of the polarization de-multiplexer. In such cases, it is preferable to use as the received signal downstream of the phase modulator, i.e. as the signal that is used for defining the error signal, the received signal downstream of the equalizer for chromatic dispersion and/or downstream of the polarization de-multiplexer. It should be noted that phase modulators for SPM compensation may be distributed over various positions within the receiver path.

Alternatively or in addition, it may be beneficial to position the phase modulator at at least one intermediate point within the equalizer for chromatic dispersion, thereby dividing the equalizer in a partial equalizer upstream and a partial equalizer downstream of the phase modulator. This may be advantageous as SPM compensation at an intermediate point within the equalizer may better model the fact that both, linear effects, such as CD, and non-linear effects, such as SPM, occur in a continuous manner on the optical fiber. Consequently, a closer blending between the compensation of linear effects and the mitigation of non-linear effects may yield better overall post-processing results. As a matter of fact, it may be beneficial to position several phase modulators for the compensation of SPM at several intermediate points within the CD equalizer. Also in these cases, it is preferable to select as the received signal downstream of the phase modulator, i.e. as the signal that is used for defining the error signal, the received signal downstream of the equalizer for chromatic dispersion and/or downstream of the polarization de-multiplexer.

If a phase modulator according to the invention is placed at intermediate points within the CD equalizers, then a preferred method for determining the equalization parameters of the partial equalizers upstream and downstream of the phase modulator may be to determine the parameters based on the assumption that no intermediate phase modulation is performed. In other words, it may be assumed that an uninterrupted CD equalization is performed by means of a virtual combined CD equalizer. Under this assumption, the parameters of such a virtual combined CD equalizer may be determined using a constant modulus algorithm. Preferably, such a virtual combined CD equalizer is determined for each signal component.

Once the parameters of the combined virtual CD equalizer are known, then the equalization parameters of the partial CD equalizers upstream and downstream of the phase modulator may be determined. In this context, a preferable constraint is that the concatenation of the partial CD equalizers yields the same Dirac impulse response than the virtual combined CD equalizer. This constraint leads to a system of equations for the determination of the equalization parameters of the partial CD equalizers.

A further constraint may be that the equalization parameters of the partial equalizer upstream of the phase modulator are equal to the equalization parameters of the partial equalizer downstream of the phase modulator.

It should be noted that when using a plurality of intermediate phase modulators for SPM mitigation, the equalization parameters of the partial CD equalizers may be obtained in a similar manner. First, a virtual combined CD equalizer may be determined based on the assumption that no intermediate phase modulation is performed. Then the partial CD equalization parameters are determined using the constraint that the Dirac impulse response of concatenated partial CD equalizers should be equal to the Dirac impulse response of the combined CD equalizer.

According to another aspect of the invention, a further method and a system for compensating self-phase modulation at an optical receiver of an optical transmission system using polarization division multiplexing and a modulation scheme with constant amplitude is proposed. At the optical receiver, a signal comprising two signal components associated with two orthogonal polarizations is received. The two signal components of the received signal may be provided as separate signals, e.g. by use of a polarization splitter. The received signal is polarization de-multiplexed. The method comprises the step of performing a phase modulation on a signal component in the course of polarization de-multiplexing based on evaluating a phase error signal.

According to a further aspect of the invention, the phase error signal depends on the difference between a current carrier phase of a signal component after phase modulation and an average carrier phase of that signal component.

The carrier phase of a signal component may be determined by eliminating the phase modulation of the signal component. This may be achieved by different means depending on the underlying modulation scheme. By way of example, the carrier phase of a QPSK modulated signal component may be isolated by applying a power of four operation on the signal component, e.g. $(I + jQ)^4$. The carrier phase is obtained as the argument of the resulting complex number. Consequently, the current carrier phase of a QPSK modulated signal component may be obtained by applying a power of four operation on the current sample of the I and Q sub-components, e.g. $(I + jQ)^4$. The average carrier phase may be obtained by averaging the current carrier phase over a pre-determined number of samples.

It should be noted that this further method and system including its preferred embodiments as outlined below may be used stand-alone or in combination with the other methods and systems disclosed in this document. Furthermore, it should be noted that in a preferred embodiment the evaluation of the phase error signal comprises the minimization of the phase error signal, e.g. the minimization of the mean square error. This may be achieved by applying an iterative constant modulus algorithm (CMA) using the phase error signal.

According to another aspect of the invention, the polarization de-multiplexer determines the two signal components downstream of the polarization de-multiplexer by combining the two weighted signal components. The two signal components upstream of the polarization de-multiplexer are each multiplied by a weight and then added. In other words, the two signal components before polarization multiplexing are combined by different sets of weights in order to yield two other signal components after polarization multiplexing.

For such polarization de-multiplexers, the method and system according to the invention may comprise a phase modulator at each weight of the polarization de-multiplexer. In this case, the signal component forming the basis of the phase error signal preferably is the signal component downstream of the polarization de-multiplexer associated with the respective weight. In other words, the phase error signal is determined based on the signal component downstream of the polarization de-multiplexer to which the signal component passing through the respective phase modulator is contributing.

Furthermore, due to the fact that the extent of the distortions caused by SPM are proportional to the intensity of the optical pulse, it may be beneficial that the phase modulation of each of the phase modulators depends on the intensity of the signal component upstream of the polarization de-multiplexer associated with the respective weight.

The invention is explained below in an exemplary manner with reference to the accompanying drawings, wherein

Fig. 1     illustrates a prior art PDM-QPSK receiver with CD compensation and po- larization de-multiplexing;

Fig. 2     illustrates an embodiment of the invention employing self-phase modula- tion compensation before CD equalization;

Fig. 3    illustrates another embodiment of the invention employing self-phase modulation before and within the CD equalizer;

Fig. 4    illustrates another embodiment of the invention employing self-phase modulation within the polarization de-multiplexer; and

Fig. 5    illustrates the generation of the phase error signal used for the determina- tion of the phase corrector value of the embodiment in Fig. 4.

Fig. 1 was already discussed in the introductory part of this document.

Fig. 2 illustrates an embodiment of the invention employing self-phase modulation compensation before CD equalization. In the shown example the optical receiver comprises two CD equalizers 210, 211 for each signal component and a polarization de-multiplexer 212. In addition, the optical receiver comprises a phase compensator or phase modulator 201, 202 for each transversal signal component $i_x + jq_x$ and $i_y + jq_y$, respectively. The phase compensators employ an offset of the signal phase, i.e. they increase or decrease the signal phase, by the phase correctors or phase corrector values $DphiX$ and $DphiY$ for the "x" and the "y" signal components, respectively.

According to an aspect of the invention, the phase corrector values may be determined in a phase corrector determination unit 205, using the following equations:

$$DphiX = k_x \cdot \left( i_x^{\ 2} + q_x^{\ 2} + i_y^{\ 2} + q_y^{\ 2} \right),$$

$$DphiY = k_y \cdot \left( i_x^{\ 2} + q_x^{\ 2} + i_y^{\ 2} + q_y^{\ 2} \right),$$

wherein $k_x$, $k_y$ are the proportionality factors between intensity and phase modulation which determine the modulation depth of the phase modulation. This factors are here referred to as iterative step factors for the respective phase correctors and wherein the term $(i_x^2 + q_x^2 + i_y^2 + q_y^2)$ represents the intensity of the combined PDM input signal to the self-phase modulation compensator, i.e. the intensity of the combined transversal signal components $i_x + jq_x$ and $i_y + jq_y$.

According to another aspect of the invention, the iterative step factors $k_x$, $k_y$ may be determined within an iterative step factor determination unit 204 in an iterative manner using the following equations:

$$k_x^{l+1} = k_x^l - \alpha \cdot \mathrm{Im}\left\{ \left( I_x + jQ_x \right) \cdot e \cdot \left( i_x + jq_x \right) \right\},$$

$$k_y^{l+1} = k_y^l - \alpha \cdot \mathrm{Im}\left\{ \left( I_y + jQ_y \right) \cdot e \cdot \left( i_y + jq_y \right) \right\},$$

wherein at the iteration $l$, $k_x^l$, $k_y^l$ are the current iterative step factors, $k_x^{l+1}$, $k_y^{l+1}$ are the updated iterative step factors and $\alpha$ is a convergence parameter. The terms $(I_x + jQ_x)(i_x + jq_x)$ and $(I_y + jQ_y)(i_y + jq_y)$ are terms indicating the orientation of the correlation between the respective input signal component and the respective output signal component, i.e. the correlation between $i_x + jq_x$ and $I_x + jQ_x$ for the "x" transversal component and the correlation between $i_y + jq_y$ and $I_y + jQ_y$ for the "y" transversal component. The error signal e with its positive or negative sign indicates the direction of the correction. For ideal correction e becomes zero, at least in average of many time instants. Due to the fact that in the present example, the iterative step factors are natural numbers, either the absolute values of these correlation terms, their real part or their imaginary part may be used. However, as shown in the equation above, the imaginary part might be favorable, since an incremental variation of $k$ induces an incremental rotation of the optical field $i + jq$ at the phase modulator output, since a real valued $k$ appears in the exponent of the modulation factor $\exp(jk...)$. This incremental rotation of the optical input field to the phase modulator in the complex plane can be approached by adding an incremental field component multiplied by a small imaginary number. Furthermore, good results have been achieved by using the imaginary part of the correlation terms. Finally, the equation comprises the term $e$, which is an error value or error signal determined on the basis of the compensated output signal of the optical receiver.

It should also be noted that the step factors may be complex numbers. In that case the complex correlation terms would be maintained for the determination of the step factors. Consequently, *DphiX* and *DphiY* would actually be complex numbers and the compensation of the self-phase modulation 201 and 202 would comprise a phase and an amplitude compensation component. This may be beneficial, as due to a continuous overlap of linear and non-linear distortions in a real optical fiber, self-phase modulation may also comprise an amplitude distortion component.

The error value $e$ is determined in an error signal determination unit 203 on the basis of the compensated combined output signal, comprising both transversal components $I_x + jQ_x$ and $I_y + jQ_y$. The output signal may be any signal downstream of the compensation of the self-phase modulation, but it is preferably the output signal at the output of the signal processing section of the optical receiver having passed through post-processing and having a corrected constellation.

For the determination of the error signal $e$, one may consider the knowledge of the position of the constellation points of the underlying modulation scheme. By way of example, the constellation points of a QPSK modulation scheme are positioned on a circle on the in-phase and quadrature axes diagram. The same applies to other PSK modulation schemes, such as BPSK or higher order PSK modulation schemes, such as 8-PSK. Consequently, in case of PSK modulation, the constellation points of the combined PDM signal, comprising both transversal components and forming the four dimensional signal $S = (I_x, Q_x, I_y, Q_y)$, are positioned on a four-dimensional sphere. In general terms this is true for polarization division multiplexed signals for which the intensity of the signal on the possible constellation points is constant. If the constellation is normalized, then this sphere has a radius $R$ of 1. In the present embodiment, the error signal $e$ is defined as the distance between the combined received four-dimensional signal $S = (I_x, Q_x, I_y, Q_y)$ and the four-dimensional sphere defined by the possible constellation points.

In other words, the self-phase modulation compensation of the embodiment of Fig. 2 can be described as follows: An error value or error signal $e$ is formed by the $I_x + jQ_x$, and $I_y + jQ_y$ complex output signals of the optical receiver. The error signal $e$ is the four-dimensional positive or negative difference between the four-dimensional signal $S = (I_x, Q_x, I_y, Q_y)$ and the four-dimensional sphere with the radius $R$ (e.g. $R = 1$). For SPM mitigation or compensation, the phase of each digitized photodiode signal $i_x + jq_x$ and $i_y + jq_y$ is phase-modulated with a value that is proportional to the total intensity of the combined digitized photodiode signal. The value is obtained by multiplying the total intensity with factors $k_x$ and $k_y$ that are adapted by an adaptation algorithm which minimizes the mean square error of the error signal $e$. It may be beneficial to consider the additional constraint that $k_x$ equals $k_y$. This latter constraint would result in identical mitigation of the self-phase modulation on both signal components.

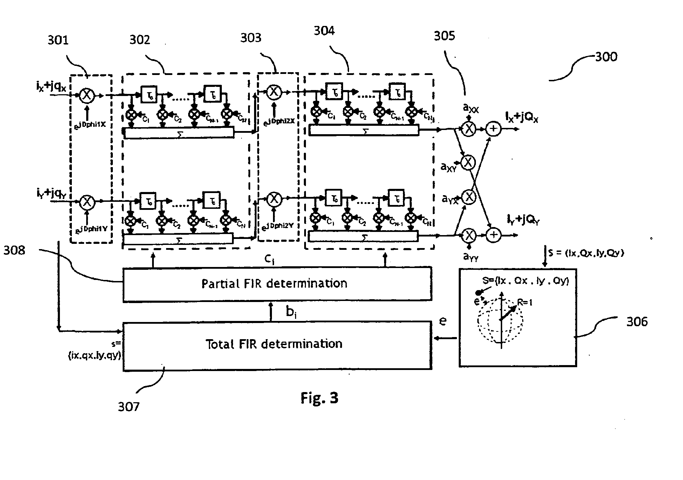

Fig. 3 illustrates another embodiment 300 of the invention employing self-phase modulation in front of and within the CD equalizer. Due to the fact that on a real optical fiber linear distortion effects, such as chromatic dispersion, and non-linear effects, such as self-phase modulation, occur in a continuous manner, it may be beneficial to also model these effects in a rather continuous manner. Therefore it may be beneficial to merge as much as possible the equalization of CD and the mitigation of SPM. In practice, this may be done by successively alternating CD equalization and SPM mitigation. Fig. 3 shows an embodiment where a first SPM mitigation unit 301 is followed by a first CD equalization unit 302, which is followed by a second SPM mitigation unit 303 and a second CD equalization unit 304. In the illustrated example, the signal processing is finalized by a polarization de-multiplexer 305.

The CD tap coefficients $c_i$ of the two stages of CD equalizers 302 and 304 may be determined by minimizing an error signal at the output of the optical receiver, e.g. $I_x + jQ_x$ and $I_y + jQ_y$. When treating the "x" and "y" components of the polarization division multiplexed signal separately, one may define separate error signals for the "x" and "y" signal components, e.g.

$$e_x = 1 - \left| I_x + jQ_x \right|^2,$$

$$e_y = 1 - \left| I_y + jQ_y \right|^2,$$

if the constellation points of each signal component are on a normalized circle of radius 1.

Due to continuous succession of linear and non-linear distortions on a real optical fiber and due to the fact that also in the present embodiment CD equalization and SPM mitigation successively alternate each other, it may be beneficial to also use the error signal $e$ defined in the context of Fig. 2 for the determination of the CD tap coefficients. This error signal $e$, which is related to the distance of the four-dimensional combined output signal $S = (I_x, Q_x, I_y, Q_y)$ to the four-dimensional sphere defined by the possible constellation points of the underlying modulation, may better match the distortions incurred by the continuous succession of linear and non-linear distortions. This clearly differs from the CMA based method for the determination of the CD tap coefficients outlined in the previous paragraph, which is purely related to an error signal of a respective transversal signal component, either the "x" or the "y" component of the polarization division multiplexed output signal.

Using either one of the error signals $e$, $e_x$ and/or $e_y$ determined in the error signal determination unit 306, the CD tap coefficients $b_i$ of a virtual combined CD equalizer are determined in the total FIR determination unit 307. As shown in Fig. 3, each partial CD equalizer 302, 304 comprises $N$ tap coefficients $c_i$ for each transversal signal component. Therefore, each signal component is equalized using $2 \times N$ CD tap coefficients. These two successive CP equalizers have a combined finite impulse response of a length of $2 \times N$ -1 samples and it is therefore sufficient to determine a virtual combined CD equalizer having $2 \times N$ - 1 tap coefficients $b_i$. These tap coefficients $b_i$ may be determined by means of a constant modulus algorithm, wherein the error signal $e$ or $e_x$ and $e_y$ determined in error signal determination unit 306 is used. The transversal input signals $i_x + jq_x$ and $i_y + jq_y$, and the transversal output signals $I_x + jQ_x$ and $I_y + jQ_y$ are used in the CMA for the determination of the respective tap coefficients of the "x" and the "y" signal component. It may also be beneficial to determine joint tap coefficients for both signal components, i.e. for the upper and the lower CD equalizers shown in Fig. 3. In this case, one may use the four-dimensional input signal $s = (i_x, q_x, i_y, q_y)$ and the four-dimensional output signal $S = (I_x, Q_x, I_y, Q_y)$ in a joint constant modulus adaptation algorithm.

In a following step, the $N$ CD tap coefficients $c_i$ are determined on the basis of the $2 \times N$ -1 tap coefficients $b_i$ of the virtual combined CD equalizer. It is known how to adapt a complex FIR filter B with $2 \times N$ - 1 taps $b_i$ to an actual chromatic dispersion. As outlined above, typical adaptation schemes are the CMA algorithm if only the magnitude of the complex is known or the LMS (least means square) algorithm if the decisions are used for adaptation. In the following example it is shown how the filter B with $2 \times N$ -1 taps can be replaced by the cascade of two identical FIR filters C, each with $N$ taps $c_i$. This is done in the partial FIR determination unit 308 and may be performed by using an iterative set of equations.

For this purpose, one may target to match the Dirac impulse response of the virtual combined CD equalizer B and the two successive partial CD equalizers C 302, 304. In other words, the long filter $b_i$ and the cascade $c_i$ should have the same impulse response. A possible way to calculate $c_i$ out of $b_i$ is as follows. For simplicity it is assumed that the tap indices start with 0, hence the taps of the combined CD equalizer B are $b_0$ , ..., $b_{2N-2}$ and the taps of the two partical CD equalizers C are $c_0$ , ..., $c_{N-1}$. With an identical tap spacing $T_c$, the impulse response generated by a tap $b_i$ appears at a Dirac impulse of the area $c_i$ and at the time $i \times T_c$. Consequently, at $t = 0 \times T_c$ the combined equalizer B generates a pulse of $b_0$ and the two cascaded equalizers C generate a pulse of $c_0^2$, which has to be equal to the pulse of the combined equalizer, i.e. $c_0^2 = b_0$. Hence, it is

$$c_0 = \sqrt{b_0} \;.$$

In a similar manner, at $t = 1 \times T_c$ the combined equalizer B generates a pulse of $b_1$ and the two cascaded equalizers C a pulse of $c_0 c_1 + c_1 c_0$. Hence, it is

$$\sum_{n+m=1} c_n c_m = c_0 c_1 + c_1 c_0 = b_1 .$$

In general, at $t = r \times T_c$ the combined equalizer B provides the pulse $b_r$ and the cascaded equalizers C provide the pulses:

$$\sum_{n+m=r} c_n c_m = 2 c_r c_0 + 2 \sum_{r>n \ge m>0} c_n c_m = b_r .$$

In the summation, all pairs of taps $c_n$ and $c_m$ appear which generate a contribution at the time instant $r \times T_c$. For $c_r$ we finally obtain:

$$c_r = \frac{b_r - 2 \sum\limits_{r > n \geq m > 0} c_n c_m}{2c_0}.$$

An alternative to deduce the coefficients is to start with the last taps and to move down during the tap calculation process. Other solving procedures are also applicable.

Once the CD tap coefficients $c_i$ of the first and second CD equalizers 302, 304 have been determined, the phase correctors $Dphi1X$ and $Dphi1Y$ of the first SPM mitigation unit 301 and the phase correctors $Dphi2X$ and $Dphi2Y$ of the second SPM mitigation unit 303 may be determined using the adaptive algorithm described in the context of Fig. 2. For this purpose the output signal components $I_x + jQ_x$ and $I_y + jQ_y$ may be used. With regards to the input signals used for the described algorithm, the input signals $i_x + jq_x$ and $i_y + jq_y$ may be used for the determination of the phase correctors for both SPM mitigation units 301 und 303. Preferably, one uses the input signal to the respective SPM mitigation unit as the input signal used for the determination of the phase correctors or phase corrector values, i.e. the input signal to SPM mitigation unit 301 is used for the determination of the phase corrector values of the SPM mitigation unit 301 and the input signal to SPM mitigation unit 303 is used for the determination of the phase corrector values of the SPM mitigation unit 303.

In other words, the embodiment illustrated in Fig. 3 may be described as a further improvement of SPM mitigation illustrated in Fig. 2 by applying a further SPM mitigation in a middle stage, e.g. through a second non-linear compensation unit 303. For this purpose, a required large FIR filter having $2 \times N - 1$ taps for chromatic dispersion compensation is split into two possibly identical FIR filters of half size, i.e. of N taps. In addition, an adaptation scheme is proposed, wherein the virtual large FIR filter having $2 \times N - 1$ taps $b_i$ is adapted e.g. by using a constant modulus algorithm and wherein the taps $c_i$ of the two small FIR filters are calculated from the taps $b_i$. This calculation may be done by numerical operations performed in the partial FIR determination unit 308.

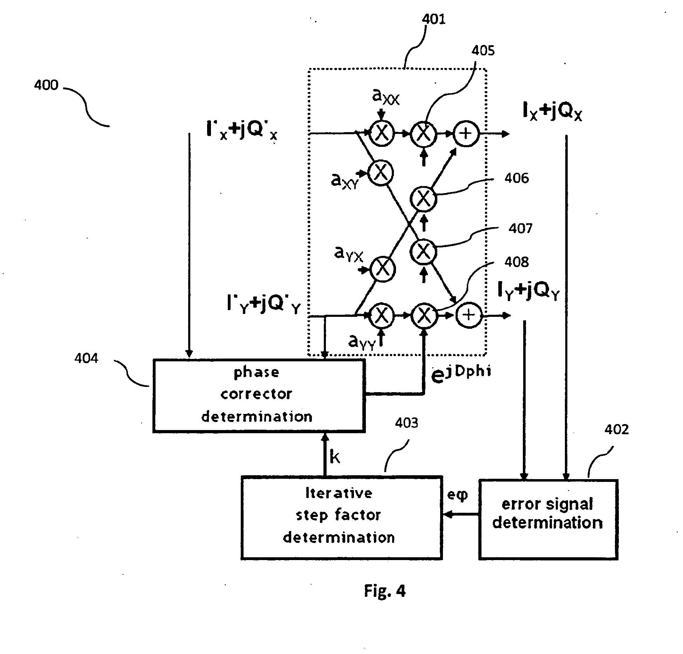

Fig. 4 illustrates another embodiment 400 of the invention employing self-phase modulation within the polarization de-multiplexer 401. This embodiment may be used stand-alone or in combination with the embodiments described in the context of Fig. 2 and Fig. 3. In Fig. 4 four phase modulators 405, 406, 407, 408 for SPM mitigation are positioned within the polarization de-multiplexer 401. Each phase modulator is characterized by a particular transversal input signal component upstream of the polarization de-multiplexer and a particular transversal output signal component downstream of the polarization de-multiplexer. In particular, phase modulator 405 has the input signal component $I'_x + jQ'_x$ and the output signal component $I_x + jQ_x$, phase modulator 406 has the input signal component $I'_y + jQ'_y$ and the output signal component $I_x + jQ_x$, phase modulator 407 has the input signal component $I'_x + jQ'_x$ and the output signal component $I_y + jQ_y$ and phase modulator 408 has the input signal component $I'_y + jQ'_y$ and the output signal component $I_y + jQ_y$.

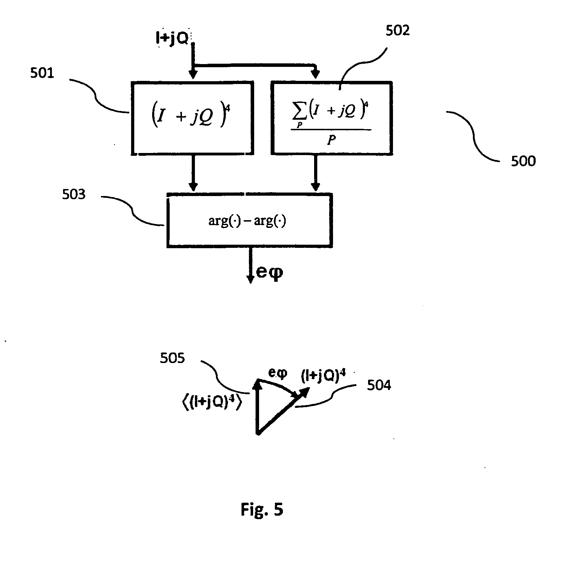

For each of the phase modulators 405, 406, 407, 408 an error signal is determined based on its respective output signal component. This is done in error signal determination unit 402. The method for determining the error signal is further illustrated in Fig. 5. For the respective output signal component, referred to in Fig. 5 as $I + jQ$, the current carrier phase is determined in the current phase determination unit 501 and the average carrier phase is determined in the average phase determination unit 502.

The distortions induced by non-linearity and noise lead to additional phase modulation which is in average equally distributed around the constellation center point. By removing the modulation of a QPSK signal by calculating the fourth power, the "new" constellation points are distributed around one common center point. The deviations from this point in phase are proportional to the phase distortions induced by non-linearity and noise. Hence it is possible to obtain an accurate phase estimate of the carrier phase by averaging the carrier phase over a plurality of symbol or sample intervals. Raising the signal $I + jQ$ to the fourth power $(I + jQ)^4$ cancels the modulated phase for a QPSK modulation. Other modulation schemes may require different processing of the samples to cancel the modulated phase. For instance, BPSK may require a squaring function to be applied to the complex values of signal samples. The phase is then averaged over a block of $P$ samples by summing the complex values $(I + jQ)^4$. The average carrier phase estimate $\varphi_m$ is obtained by

$$\varphi_m = \arg\left[ \frac{1}{P} \sum_{p=1}^{P} (I + jQ)^4 \right].$$

The current carrier phase estimate $\varphi_c$ for a specific sample of $I + jQ$ is given by

$$\varphi_c = \arg\left[ (I + jQ)^4 \right] .$$

The error signal $e_\varphi$ is obtained in the phase difference determination unit 503 as

$$e_\varphi = \varphi_c - \varphi_m .$$

Fig. 5 illustrates this error signal $e_\varphi$ as the phase difference between the current carrier phase $\varphi_c$, represented by arrow 504, and the average carrier phase $\varphi_m$, represented by arrow 505.

By using the error signal $e_\varphi$, a step factor $k$ is determined in the iterative step factor determination unit 403. This may be done by using a constant modulus algorithm, wherein as an input signal, the respective transversal input signal to the respective phase modulator upstream of the polarization de-multiplexer, i.e. either $I'_x + jQ'_x$ or $I'_y + jQ'_y$, is used and wherein as an output signal, the respective transversal output signal of the respective phase modulator downstream of the polarization de-multiplexer, i.e. $I_x + jQ_x$ or $I_y + jQ_y$, is used. Consequently four step factors $k_{xx}$, $k_{xy}$, $k_{yx}$ and $k_{yy}$ are determined for the four phase modulators 405, 406, 407 and 408, respectively. In the annotation of the step factors, the first index letter indicates the transversal input signal component of the phase modulator and the second index letter indicates the transversal output signal component to the phase modulator.

In a next step, the phase corrector values of the four phase modulators, referred to as *DphiXX*, *DphiYX*, *DphiXY* and *DphiYY*, are determined in the phase corrector determination unit 404. The phase corrector values may be obtained in unit 404 by multiplying the respective step factors with the intensity of the transversal input signal component to the respective phase modulator, i.e.

$$DphiXX = k_{xx} \cdot \left( I'^2_x + Q'^2_x \right),$$

$$DphiYX = k_{yx} \cdot \left( I'^2_y + Q'^2_y \right),$$

$$DphiXY = k_{xy} \cdot \left( I'^2_x + Q'^2_x \right),$$

$$DphiYY = k_{yy} \cdot \left( I'^2_y + Q'^2_y \right).$$

In other words, the embodiment of the invention illustrated in Fig. 4 may be described as an improvement of the SPM mitigation by a further phase modulation, e.g. at the signal processing output, by phase modulation within the polarization de-multiplexer 401. A further error signal $e_\varphi$ is proposed for adaptation of the intensify proportional phase modulation. This error signal $e_\varphi$ is proportional to the phase difference between the phase of the respective output signal component (either in "x" or in "y" polarization) and the average output signal phase. The signal phase can be obtained by a power of four operation, which eliminates the modulation.

The present document discloses means for mitigating self-phase modulation in an optical transmission system. Specifically for future 100Gb/s Ethernet transponders based on coherent detection, the fiber launch power reduction is expected to be the limiting effect. The elements proposed in the present document enable the reduction of the associated distortion, notably SPM, and hence allow to increase the fiber launch power of each optical span. By this means the optical link budget can be increased. The invention may be implemented on a DSP, e.g. using ASIC (application-specific integrated circuit) or FPGA (field-programmable gate array) technology.

**Claims**

1. A method for compensating self-phase modulation at an optical receiver (100) of an optical transmission system using polarization division multiplexing and a modulation scheme with constant amplitude, the method comprising the step:

   - receiving a signal which comprises two signal components associated with two orthogonal polarizations, each component comprising an in-phase sub-component and a quadrature-phase sub-component, thereby spanning a four-dimensional space;

   **characterized in that** the method further comprises the step:

   - performing a phase modulation (201, 202) on a received signal, wherein the phase modulation (201, 202) is determined by evaluating an error signal (203) which depends on the distance in the four-dimensional space between the received signal after the phase modulation and a four-dimensional sphere defined by target constellation points of the optical transmission system.

2. The method according to claim 1, wherein the phase modulation (201, 202) depends on the intensity of the received signal before the phase modulation (201, 202).

3. The method according to claim 1, wherein

   - the two signal components of the received signal are provided separately; and
   - phase modulation (201, 202) is performed on each signal component.

4. The method according to claim 3, wherein

   - the method is an iterative method; and
   - the phase modulation (201, 202) on a signal component depends on a step factor which at a given iteration is obtained by correcting the step factor of the previous iteration by the actual error signal multiplied by a value which depends on the multiplication between the signal component before the phase modulation (201, 202) and the corresponding signal component after the phase modulation (201, 202).

5. The method according to claim 1, wherein

   - the modulation scheme with constant amplitude is quadrature phase-shift keying modulation.

6. The method according to claim 1 wherein

   - the two signal components of the received signal are provided; and
   - the received signal is polarization de-multiplexed (401); and

   wherein the method comprises the further step of

   - performing a phase modulation (405, 406, 407, 408) on a signal component in the course of polarization de-multiplexing (401) based on evaluating a phase error signal (402) which depends on the difference between a current carrier phase of a signal component after the phase modulation and an average carrier phase of that signal component.

7. A system for compensating self-phase modulation at an optical receiver (100) of an optical transmission system using polarization division multiplexing and a modulation scheme with constant amplitude, wherein

   - a received signal comprises two signal components associated with two orthogonal polarizations, each component comprising an in-phase sub-component and a quadrature-phase sub-component, thereby spanning a four-dimensional space; and

   wherein the system is **characterized in that**

- it comprises a phase modulator (201, 202), operative to perform a phase modulation on the received signal, wherein the phase modulation is determined by evaluating an error signal (203) which depends on the distance in the four-dimensional space between the received signal downstream of the phase modulator and a four-dimensional sphere defined by target constellation points of the optical transmission system.

8. The system according to claim 7, wherein the optical receiver (100) further comprises:

- an equalizer for chromatic dispersion (210, 211) of the received signal; and
- a polarization de-multiplexer (212).

9. The system according to claim 8, wherein

- the phase modulator (201, 202) is arranged upstream of the equalizer for chromatic dispersion (210, 211) and upstream of the polarization de-multiplexer (212); and
- the received signal downstream of the phase modulator (201, 202) is the received signal downstream of the equalizer for chromatic dispersion (210, 211) and downstream of the polarization de-multiplexer (212).

10. The system according to claim 8, wherein

- the phase modulator (303) is positioned at an intermediate point within the equalizer for chromatic dispersion (302, 304), with the equalizer comprising a partial equalizer upstream (302) and a partial equalizer downstream (304) of the phase modulator (303); and
- the received signal downstream of the phase modulator (303) is the received signal downstream of the equalizer for chromatic dispersion (304) and downstream of the polarization de-multiplexer (305).

11. The system according to claim 10, wherein

- equalization parameters of the partial equalizers upstream (302) and downstream (304) of the phase modulator (303) are determined by

- determining equalization parameters of a virtual combined equalizer assuming that no intermediate phase modulation is performed; and
- determining the equalization parameters of the partial equalizers (302, 304) having the same combined impulse response as the virtual combined equalizer.

12. The system according to claim 10, wherein

- the equalization parameters of the partial equalizer upstream (302) of the phase modulator (303) are equal to the equalization parameters of the partial equalizer downstream (304) of the phase modulator (303).

13. The system according to claim 7, wherein the optical receiver (100) comprises

- a splitting unit (106), operative to provide the two signal components of the received signal;
- a polarization de-multiplexer (401), operative to de-multiplex the polarization of the received signal; and

wherein the system further comprises

- a phase modulator (405, 406, 407, 408) at an intermediate point within the polarization de-multiplexer (401), the phase modulator (405, 406, 407, 408) being operative to perform a phase modulation on a signal component based on evaluating a phase error signal (402) which depends on the difference between a current carrier phase of a signal component downstream of the phase modulator (405, 406, 407, 408) and an average carrier phase of that signal component.

14. The system according to claim 13, wherein

- the polarization de-multiplexer (401) determines the two signal components downstream of the polarization de-multiplexer (401) by adding the two signal components upstream of the polarization de-multiplexer (401), wherein each signal component is multiplied by a weight;

- the system comprises a phase modulator (405, 406, 407, 408) at each weight of the polarization de-multiplexer (401); and
- the signal component on which the phase error signal depends is the signal component downstream of the polarization de-multiplexer (401) associated with the respective weight.

15. The system according to claim 14, wherein

- the phase modulation of each of the phase modulators (405, 406, 407, 408) depends on the intensity of the signal component upstream of the polarization de-multiplexer (401) associated with the respective weight.


**Patentansprüche**

1. Ein Verfahren zur Kompensation einer Selbstphasenmodulation an einem optischen Empfänger (100) eines optischen Übertragungssystems unter Anwendung von Polarisationsmultiplexing und eines Modulationsschemas mit konstanter Amplitude, wobei das Verfahren den folgenden Schritt umfasst:

- Empfangen eines Signals, welches zwei mit zwei orthogonalen Polarisationen assoziierte Signalkomponenten umfasst, wobei jede Komponente eine In-Phase-Teilkomponente und eine Quadraturkomponente umfasst, wodurch ein vierdimensionaler Raum abgedeckt wird;

**dadurch gekennzeichnet, dass** das Verfahren weiterhin den folgenden Schritt umfasst:

- Durchführen einer Phasenmodulation (201, 202) auf einem empfangenen Signal, wobei die Phasenmodulation (201, 202) durch das Bewerten eines Fehlersignals (230), welches von der Entfernung in dem vierdimensionalen Raum zwischen dem empfangenen Signal nach der Phasenmodulation und einer von den Soll-Konstellationspunkten des optischen Übertragungssystems definierten vierdimensionalen Kugel abhängt, bestimmt wird.

2. Das Verfahren nach Anspruch 1, wobei die Phasenmodulation (201, 202) von der Intensität des empfangenen Signals vor der Phasenmodulation (201, 202) abhängt.

3. Das Verfahren nach Anspruch 1, wobei

- die zwei Signalkomponenten des empfangenen Signals separat bereitgestellt werden; und
- die Phasenmodulation (201, 202) auf jeder Signalkomponente durchgeführt wird.

4. Das Verfahren nach Anspruch 3, wobei

- das Verfahren ein iteratives Verfahren ist; und
- die Phasenmodulation (201, 202) auf einer Signalkomponente von einem Schrittfaktor abhängt, welcher bei einer gegebenen Iteration durch das Korrigieren des Schrittfaktors der vorausgegangenen Iteration mit dem momentanen Fehlersignal, multipliziert mit einem von der Multiplikation zwischen der Signalkomponente vor der Phasenmodulation (201, 202) und der entsprechenden Signalkomponente nach der Phasenmodulation (201) abhängigen Wert, erhalten wird.

5. Das Verfahren nach Anspruch 1, wobei

- das Modulationsschema mit konstanter Amplitude eine Quadratur-Phasenumtastungsmodulation ist.

6. Das Verfahren nach Anspruch 1, wobei

- beide Signalkomponenten des empfangenen Signals bereitgestellt werden; und
- das empfangene Signal polarisationsgedemultiplext (401) wird; und

wobei das Verfahren weiterhin den folgenden Schritt umfasst:

- Durchführen einer Phasenmodulation (405, 406, 407, 408) auf einer Signalkomponente während des Polarisationsdemultiplexvorgangs (401) auf der Basis der Bewertung eines Phasenfehlersignals (402), welche von der Differenz zwischen einer momentanen Trägerphase einer Signalkomponente nach der Phasenmodulation und einer durchschnittlichen Trägerphase dieser Signalkomponente abhängt.

7. Ein Systems zur Kompensation einer Selbstphasenmodulation an einem optischen Empfänger (100) eines optischen Übertragungssystems unter Anwendung von Polarisationsmultiplexing und eines Modulationsschemas mit konstanter Amplitude, wobei

- ein empfangenes Signal zwei mit zwei orthogonalen Polarisationen assoziierte Signalkomponenten umfasst, wobei jede Komponente eine In-Phase-Teilkomponente und eine Quadratur-Teilkomponente umfasst, wodurch ein vierdimensionaler Raum abgedeckt wird; und

wobei das System **dadurch gekennzeichnet ist, dass**

- es einen Phasenmodulator (201, 202) umfasst, welcher dazu ausgelegt ist, eine Phasenmodulation auf dem empfangenen Signal durchzuführen, wobei die Phasenmodulation durch die Bewertung eines Fehlersignals (203) bestimmt wird, welches von der Entfernung in dem vierdimensionalen Raum zwischen dem empfangenen Signal nach dem Phasenmodulator und einer von Soll-Konstellationspunkten des optischen Übertragungssystems definierten vierdimensionalen Kugel abhängt.

8. Das System nach Anspruch 7, wobei der optische Empfänger (100) weiterhin umfasst:

- Einen Entzerrer für die chromatische Dispersion (210, 211) des empfangenen Signals; und
- einen Polarisationsdemultiplexer (212).

9. Das System nach Anspruch 8, wobei

- der Phasenmodulator (201, 202) vor dem Entzerrer für die chromatische Dispersion (210, 211) und vor dem Polarisationsdemultiplexer (212) angeordnet ist; und
- das nach dem Phasenmodulator (201, 202) empfangene Signal das nach dem Entzerrer für die chromatische Dispersion (210, 211) und nach dem Polarisationsdemultiplexer (212) empfangene Signal ist.

10. Das System nach Anspruch 8, wobei

- der Phasenmodulator (303) an einem Zwischenpunkt innerhalb des Entzerrers für die chromatische Dispersion (302, 304) angeordnet ist, wobei der Entzerrer einen Teilentzerrer vor (302) und einen Teilentzerrer nach (304) dem Phasenmodulator umfasst; und
- das nach dem Phasenmodulator (303) empfangene Signal das nach dem Entzerrer für die chromatische Dispersion (304) und nach dem Polarisationsdemultiplexer (305) empfangene Signal ist.

11. Das System nach Anspruch 10, wobei

- die Entzerrungsparameter der Teilentzerrer vor (302) und nach (304) dem Phasenmodulator (303) bestimmt werden durch

- Bestimmen der Entzerrungsparameter eines kombinierten virtuellen Entzerrers in der Annahme, dass zwischendurch keine Phasenmodulation durchgeführt wird; und
- Bestimmen der Entzerrungsparameter der Teilentzerrer (302, 304) mit derselben kombinierten Impulsantwort wie der kombinierte virtuelle Entzerrer.

12. Das System nach Anspruch 10, wobei

- die Entzerrungsparameter des dem Phasenmodulator (303) vorgeschalteten (302) Teilentzerrers den Entzerrungsparametern des dem Phasenmodulator (303) nachgeschalteten (304) Teilentzerrers entsprechen.

13. Das System nach Anspruch 7, wobei der optische Empfänger (100) umfasst:

- Eine Splitting-Einheit (106), welche dazu ausgelegt ist, die zwei Signalkomponenten des empfangenen Signals bereitzustellen;

- einen Polarisationsdemultiplexer (401), welcher dazu ausgelegt ist, die Polarisation des empfangenen Signals zu demultiplexen; und

wobei das System weiterhin umfasst:

- Eine Phasenmodulator (405, 406, 407, 408) an einem Zwischenpunkt innerhalb des Polarisationsdemultiplexers (401), wobei der Phasenmodulator (405, 406, 407, 408) dazu ausgelegt ist, eine Phasenmodulation auf einer Signalkomponente auf der Basis der Bewertung eines Phasenfehlersignals (402) vorzunehmen, welche von der Differenz zwischen einer momentanen Trägerphase einer Signalkomponente nach dem Phasenmodulator (405, 406, 407, 408) und einer durchschnittlichen Trägerphase dieser Signalkomponente abhängt.

14. Das System nach Anspruch 13, wobei

- der Polarisationsdemultiplexer (401) die beiden Signalkomponenten nach dem Polarisationsdemultiplexer (401) durch die Addition der beiden Signalkomponenten vor dem Polarisationsdemultiplexer (401) bestimmt, wobei jede Signalkomponente mit einer Gewichtung multipliziert wird;
- das System bei jeder Gewichtung des Polarisationsdemultiplexers (401) einen Phasenmodulator (405, 406, 407, 408) umfasst; und
- die Signalkomponente, von welcher das Phasenfehlersignal abhängt, die Signalkomponente nach dem mit der entsprechenden Gewichtung assoziierten Polarisationsdemultiplexer (401) ist.

15. Das System nach Anspruch 14, wobei

- die Phasenmodulation eines jeden der Phasenmodulatoren (405, 406, 407, 408) von der Intensität der Signalkomponente vor dem mit der entsprechenden Gewichtung assoziierten Polarisationsdemultiplexers (401) abhängt.

## Revendications

1. Procédé pour compenser une automodulation de phase dans un récepteur optique (100) d'un système de transmission optique utilisant un multiplexage par répartition de polarisation et un modèle de modulation à amplitude constante, le procédé comprenant l'étape suivante :

- recevoir un signal comprenant deux composantes de signal associées à deux polarisations orthogonales, chaque composante comprenant une sous-composante en phase et une sous-composante de phase en quadrature, couvrant ainsi un espace à quatre dimensions ;

**caractérisé en ce que** le procédé comprend en outre l'étape suivante :

- exécuter une modulation de phase (201, 202) sur un signal reçu, dans lequel la modulation de phase (201, 202) est déterminée en évaluant un signal d'erreur (203) qui dépend de la distance dans l'espace à quatre dimensions entre le signal reçu après la modulation de phase et une sphère à quatre dimensions définie par des points de constellation cibles du système de transmission optique.

2. Procédé selon la revendication 1, dans lequel la modulation de phase (201, 202) dépend de l'intensité du signal reçu avant la modulation de phase (201, 202).

3. Procédé selon la revendication 1, dans lequel

- les deux composantes de signal du signal reçu sont prévues séparément ; et
- une modulation de phase (201, 202) est exécutée sur chaque composante de signal.

4. Procédé selon la revendication 3, dans lequel

- le procédé est un procédé itératif ; et
- la modulation de phase (201, 202) sur une composante de signal dépend d'un facteur d'étape qui, à une itération donnée, est obtenu en corrigeant le facteur d'étape de l'itération précédente avec le signal d'erreur réel multiplié par une valeur qui dépend de la multiplication entre la composante de signal avant la modulation de phase (201, 202) et la composante de signal correspondante après la modulation de phase (201, 202).

5. Procédé selon la revendication 1, dans lequel

    - le modèle de modulation à amplitude constante est une modulation par déplacement de phase en quadrature.

6. Procédé selon la revendication 1 dans lequel

    - les deux composantes de signal du signal reçu sont prévues ; et
    - le signal reçu est démultiplexé en polarisation (401) ; et

dans lequel le procédé comprend l'étape supplémentaire suivante

    - exécuter une modulation de phase (405, 406, 407, 408) sur une composante de signal durant le démultiplexage en polarisation (401) en se basant sur l'évaluation d'un signal d'erreur de phase (402) qui dépend de la différence entre une phase de porteuse actuelle d'une composante de signal après la modulation de phase et une phase de porteuse moyenne de cette composante de signal.

7. Système pour compenser une automodulation de phase dans un récepteur optique (100) d'un système de transmission optique utilisant un multiplexage par répartition de polarisation et un modèle de modulation à amplitude constante, dans lequel

    - un signal reçu comprend deux composantes de signal associées à deux polarisations orthogonales, chaque composante comprenant une sous-composante en phase et une sous-composante de phase en quadrature, couvrant ainsi un espace à quatre dimensions ; et

dans lequel le système est **caractérisé en ce que**

    - il comprend un modulateur en phase (201, 202), permettant d'exécuter une modulation de phase sur le signal reçu, dans lequel la modulation de phase est déterminée en évaluant un signal d'erreur (203) qui dépend de la distance dans l'espace à quatre dimensions entre le signal reçu en aval du modulateur en phase et une sphère à quatre dimensions définie par des points de constellation cibles du système de transmission optique.

8. Système selon la revendication 7, dans lequel le récepteur optique (100) comprend en outre :

    - un égaliseur pour la dispersion chromatique (210, 211) du signal reçu ; et
    - un démultiplexeur de polarisation (212).

9. Système selon la revendication 8, dans lequel

    - le modulateur en phase (201, 202) est disposé en amont de l'égaliseur pour la dispersion chromatique (210, 211) et en amont du démultiplexeur de polarisation (212) ; et
    - le signal reçu en aval du modulateur en phase (201, 202) est le signal reçu en aval de l'égaliseur pour la dispersion chromatique (210, 211) et en aval du démultiplexeur de polarisation (212).

10. Système selon la revendication 8, dans lequel

    - le modulateur en phase (303) est positionné à un point intermédiaire à l'intérieur de l'égaliseur pour la dispersion chromatique (302, 304), l'égaliseur comprenant un égaliseur partiel en amont (302) et un égaliseur partiel en aval (304) du modulateur en phase (303) ; et
    - le signal reçu en aval du modulateur en phase (303) est le signal reçu en aval de l'égaliseur pour la dispersion chromatique (304) et en aval du démultiplexeur de polarisation (305).

11. Système selon la revendication 10, dans lequel

    - des paramètres d'égalisation des égaliseurs partiels en amont (302) et en aval (304) du modulateur en phase (303) sont déterminés

- en déterminant les paramètres d'égalisation d'un égaliseur combiné virtuel en supposant qu'aucune modulation de phase intermédiaire n'est exécutée ; et
- en déterminant les paramètres d'égalisation des égaliseurs partiels (302, 304) présentant la même réponse impulsionnelle combinée que l'égaliseur combiné virtuel.

**12.** Système selon la revendication 10, dans lequel

- les paramètres d'égalisation de l'égaliseur partiel en amont (302) du modulateur en phase (303) sont égaux aux paramètres d'égalisation de l'égaliseur partiel en aval (304) du modulateur en phase (303).

**13.** Système selon la revendication 7, dans lequel le récepteur optique (100) comprend :

- une unité de fractionnement (106), permettant de fournir les deux composantes de signal du signal reçu ;
- un démultiplexeur de polarisation (401), permettant de démultiplexer la polarisation du signal reçu ; et

dans lequel le système comprend en outre :

- un modulateur en phase (405, 406, 407, 408) positionné à un point intermédiaire à l'intérieur du démultiplexeur de polarisation (401), le modulateur en phase (405, 406, 407, 408) permettant d'exécuter une modulation de phase sur une composante de signal en se basant sur l'évaluation d'un signal d'erreur de phase (402) qui dépend de la différence entre une phase de porteuse actuelle d'une composante de signal en aval du modulateur en phase (405, 406, 407, 408) et une phase de porteuse moyenne de cette composante de signal.

**14.** Système selon la revendication 13, dans lequel

- le démultiplexeur de polarisation (401) détermine les deux composantes de signal en aval du démultiplexeur de polarisation (401) en ajoutant les deux composantes de signal en amont du démultiplexeur de polarisation (401), dans lequel chaque composante de signal est multipliée par un poids ;
- le système comprend un modulateur en phase (405, 406, 407, 408) à chaque poids du démultiplexeur de polarisation (401) ; et
- la composante de signal dont le signal d'erreur de phase dépend est la composante de signal en aval du démultiplexeur de polarisation (401) associée au poids respectif.

**15.** Système selon la revendication 14, dans lequel

- la modulation de phase de chacun des modulateurs en phase (405, 406, 407, 408) dépend de l'intensité de la composante de signal en amont du démultiplexeur de polarisation (401) associée au poids respectif.

**Prior Art**

Fig. 1

Fig. 2

Fig. 3

401

405

400

$I'_X + jQ'_X$

$a_{XX}$

$\otimes$ $\otimes$ $+$ $I_X + jQ_X$

$\otimes$ $a_{XY}$

406

$\otimes$

407

$\otimes$ $a_{YX}$

408

$\otimes$ $\otimes$ $+$ $I_Y + jQ_Y$

$I'_Y + jQ'_Y$

$a_{YY}$

$e^{j Dphi}$

404

phase
corrector
determination

403

402

k

Iterative
step factor
determination

$e\varphi$

error signal
determination

**Fig. 4**

I+jQ

501

502

$$\left(I + jQ\right)^4$$

$$\frac{\sum_{P}\left(I + jQ\right)^4}{P}$$

500

503

$$\arg(\cdot) - \arg(\cdot)$$

eφ

505

$$\langle(I+jQ)^4\rangle$$

eφ  (I+jQ)⁴

504

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S.J. Savory et al.** Digital Equalisation of 40Gbit/s per Wavelength Transmission over 2480km of Standard Fibre without Optical Dispersion Compensation. *Proceedings of ECOC 2006,* September 2006